## Europäisches Patentamt
## European Patent Office
## Office européen des brevets

(19)

(11) Veröffentlichungsnummer: **0 159 539**
**B1**

(12)

# EUROPÄISCHE PATENTSCHRIFT

(45) Veröffentlichungstag der Patentschrift: 12.09.90

(21) Anmeldenummer: 85103258.1

(22) Anmeldetag: 20.03.85

(51) Int. Cl.⁵: **G 07 F 7/08**, G 07 C 9/00

(54) **Chipkartensystem.**

(30) Priorität: 04.04.84 DE 3412663

(43) Veröffentlichungstag der Anmeldung:
30.10.85 Patentblatt 85/44

(45) Bekanntmachung des Hinweises auf die
Patenterteilung:
12.09.90 Patentblatt 90/37

(84) Benannte Vertragsstaaten:
AT CH DE FR GB IT LI

(56) Entgegenhaltungen:
EP-A-0 032 193
EP-A-0 058 029
EP-A-0 061 373
WO-A-82/03286
WO-A-83/03694
GB-A-2 020 869
GB-A-2 028 555
US-A-3 806 874
US-A-4 001 550
US-A-4 277 837

(73) Patentinhaber: Siemens Aktiengesellschaft
Wittelsbacherplatz 2
D-8000 München 2 (DE)

(72) Erfinder: Albers, Hans-Erhard, Dipl.-Ing. (FH)
Eichenring 39
D-8551 Röttenbach (DE)
Erfinder: Linneweh, Eckard, Ing. grad.
Otto-Hahn-Strasse,16,
D-8056 Neufahrn, (DE)
Erfinder: Müller, Dieter, Ing. grad.
Mayrhofer Ring 32
D-8031 Seefeld 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Chipkartensystem mit Chipkarten zur Verwendung als Geldersatz, als Ausweis bzw. als Speichermedium, bei dem eine einzige Chipkarte nacheinander für unterschiedliche Anwendungsfälle benutzbar ist, bei dem für die unterschiedlichen Anwendungsfälle unterschiedliche Bereiche eines in den Chip integrierten Speichers oder einer Funktionseinheit, vorgesehen sind, wobei für die Auswahl der unterschiedlichen Bereiche in Chip eine Auswahlschaltung in dem Chip vorgesehen ist, für die eine bestimmte Auswahlprozedur festgelegt ist, durch welche sichergestellt werden kann, daß die für den betreffenden Anwendungsfall relevanten Bereiche und nur diese zugeordnet werden, daß für spezielle Anwendungsfälle als Funktionseinheit ein Prozessor vorgesehen ist, durch den die in den unterschiedlichen speziellen Anwendungsfällen erforderlichen Prozesse abgewickelt werden, wobei diese multifunktionale Chipkarte dazu geeignet ist, zusammen mit einer Eingabe-/Ausgabe-Einrichtung zu wirken, in der ein das Aktivieren ermöglichendes Kombinationsbedienungselement vorgesehen ist und in die die Chipkarte einsteckbar ist und die für einen mobilen Einsatz zusätzlich eine Sromquelle enthält, und wobei die Eingabe-/Ausgabe-Einrichtung mit einer drahtlosen Sende-/Empfangs-Einrichtung zur Kommunikation mit einer ortsfesten Einrichtung verbindbar ist.

Bisher wurde für jeden Anwendungsfall eine eigene Chipkarte an die Benutzer ausgegeben. Die Folge davon war, daß ein Benutzer, der für unterschiedliche Anwendungsfälle entsprechende Chipkarten benutzt, eine Vielzahl derartiger Karten bei sich führen mußte. Abgesehen davon, daß die Vielzahl von Karten lästig ist, besteht die Möglichkeit der Verwechslung der Chipkarten. Bei Chipkarten nach dem Stand der Technik liegen die Kontakte zum Anschluß der Chipkarte an eine Lese-/Schreibeinrichtung offen, wodurch die Gefahr einer Verschmutzung, insbesondere mit öligen Stoffen, wie sie in Küche oder Werkstatt vorkommen, besteht. Die Folge davon ist eine schlechte Kontaktgabe und damit eine fehlerhafte Datenübertragung zwischen der Chipkarte und dem betreffenden Chipkarten-Terminal. Außerdem ist bisher ein Datentransfer nur dann möglich, wenn und solange die Chipkarte in das betreffende Terminal eingesteckt ist. Daraus resultiert beispielsweise, daß ein Datentransfer sogar bei einem reinen Lesevorgang, wie er beispielsweise beim Eingang in ein Betriebsgelände erforderlich ist, relativ lange dauert. Wenn sich beispielsweise bei Ankunft eines Verkehrsmittels vor dem Eingang eine Menschenschlange bildet, kann ein Lesevorgang mit Einstecken und Ausgeben von mehr als etwa einer halben Sekunde nicht mehr unbedingt in Kauf genommen werden. Eine Identifikationskarte nach dem Stand der Technik, mit der kommende Rufe in einer Telefon-Nebenstellenanlage an den Aufenthaltsort des Karteninhabers nachgeführt werden sollen, muß der Karteninhaber beim Kommen und beim Gehen in das betreffende Terminal einstecken, um sich an- bzw. abzumelden. Abgesehen davon, daß er in einem gegebenenfalls großen Raum das Terminal suchen muß, besteht die Gefahr, daß er das Einstecken vergißt. Hat ein Raum mehrere Türen, so müßten. u.U. entsprechend viele Terminals installiert werden, was sehr aufwendig wäre.

Bei wichtigen Vorgängen, wie z.B. dem Zutritt zu geschützten Räumen, großen Geldgeschäften oder Zugang zu geschützten Daten, ist nicht nur die Berechtigung des Karteninhabers zu prüfen, sondern auch die Identität das Inhabers. Die dazu ausgegebene geheime, im allgemeinen vierstellige Personen-Identifizierungsnummer PIN ist schlecht zu merken (und für sehr wichtige Vorgänge trotzdem zu kurz). Sie wird deshalb von vielen Benutzern in der Nähe der Karte aufgeschrieben und ist somit beim Verlust der Karte liecht von Fremden zu finden. Ist andererseits die PIN von Inhaber frei wählbar, so werden leicht merkbare Ziffernfolgen gewählt (z.B. Geburtsdatum), die von einem Fremden leicht erraten werden können. Ferner muß sichergestellt werden, daß der Karteninhaber beim Eintippen der PIN nicht beobachtet werden kann, wodurch diese Fremden bekannt werden kann.

Bisher ist eine Verwendung einer Chipkarte als Speicher, beispielsweise für Telefonnummern, Notfallinformationen, Werkzeugprogramme, als Speicher für dezentrale Datenerfassung bei Lagerbestandsaufnahmen, Buchungsvorgängen, Terminabsprachen usw., der dezentral abgefragt und verändert werden kann, aber auch zu bestimmten Zeitpunkten mit einem zentralen Speicher verglichen und ggf. korrigiert oder auf den neuesten Stand gebracht werden kann, als Ersatz für Kleingeld, wobei bei Zahlungsvorgängen in Münzfernsprechern oder Automaten Teilbeträge eines vorbezahlten Betrags gebucht werden können, als Nachweis der Kreditwürdigkeit ggf. bis zu einem vorgegebenen Limit, das bei Zahlungsvorgängen auch vermindert werden kann, als Identifikationsmittel, bei dem zusätzlich die Zuordnung der Person zur Karte durch Eingabe der persönlichen Identifikationsnummer PIN über eine Tastatur am Chipkarten-Terminal oder durch "Lesen" des Fingerabdrucks überprüft werden kann usf. bekannt.

Aus der deutschen Patentanmeldung P 33 15 047.8 ist beispielsweise bereits eine integrierte Schaltung mit einem nichtflüchtigen Schreib-Lese-Speicher bekannt, die als ein Chip ausgebildet ist, der für den Einschluß in eine Ausweiskarte, nämlich eine Chipkarte, geeignet ist.

Aus "Betriebswirtschaftliche Blätter", Heft 2, Februar 1982, S. 33—35 (Verfasser: Wolfgang Starke) ist bereits die Verwendungsmöglichkeit der sog. ec-Karte als Multifunktionskarte bekannt.

Aus der US—A—4 277 827 ist ein Chipkartensystem bakannt, bei dem eine einzige Chipkarte unterschiedliche Speicherbereiche aufweist, die durch eine Auswahlschaltung entsprechend dem gewählten Anwendungsfall angesteuert werden. die multifunktionale Chipkarte ist dazu geeignet, zusammen mit einer Eingabe-/Ausgabe-Einrichtung zu wirken, in die die Chipkarte einsteckbar ist und die für einen mobilen Einsatz zusätzlich eine Stromquelle enthält. Die Eingabe-/Ausgabe-Einrichtung ist zur drahtlosen Kommunikation mit weiteren, z.B. ortsfesten Anlagen eingerichtet, wobei die den unterschiedlichen speziellen Anwendungsfällen zugeordneten erforderlichen Prozesse durch eine Prozessor abgewickelt werden.

Aus der GB—A—2 020 869 ist der Aufbau einer zur persönlichen Identifizierung dienenden, sowie für verschiedene andere Anwendungen einzusetzenden Datenträgerkarte, auf der ein Mikrocomputer sowie verschiedene Speicher samt Energieversorgung angeordnet sind, bekannt.

Der vorliegenden Erfindung liegt die Aufgabe zugrunde, ein Chipkartensystem zu schaffen, das multifunktional verwendbar ist und das die zuvor genannten Nachteile vermeidet.

Zur Lösung dieser Aufgabe wird ein neuartiges Chipkartensystem mit Chipkarten zur Verwendung als Geldersatz, als Ausweis bzw. als Speichermedium gemäß dem Oberbegriff des Patentanspruchs 1 vorgeschlagen, das erfindungsgemäß durch die in dessen kennzeichnenden Teil angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer, Ausführungsbeispiele für die Erfindung betreffender Figuren im einzelnen erläutert.

Fig. 1 zeigt eine schematische Übersicht über das erfindungsgemäße Chipkartensystem mit einer in eine als Aufbewahrungstasche ausgebildeten Eingabe-/Ausgabe-Einrichtung eingesteckten Chipkarte und einer ortsfesten drahtlosen Sende-/Empfangs-Einrichtung.

Fig. 2 zeigt schematisch die Einteilung eines Chips für die erfindungsgemäße Chipkarte in verschiedene Funktionsbereiche.

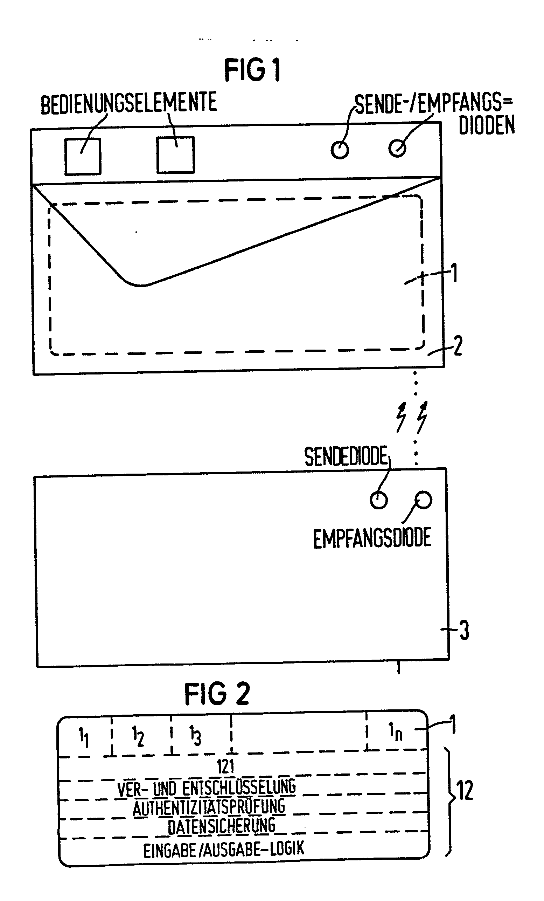

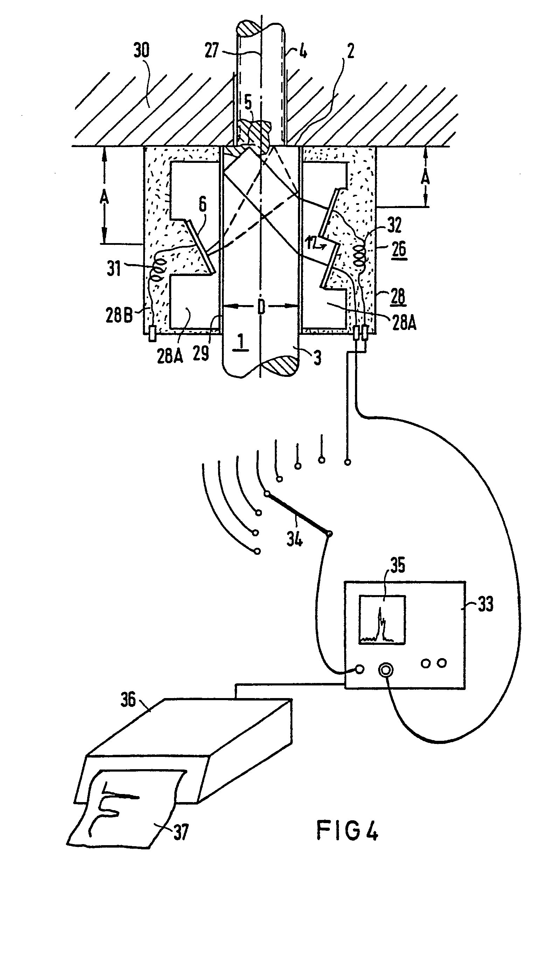

Wie bereits erläutert, ist gemäß Fig. 1 eine Chipkarte 1 vorgesehen, die zwecks Aufbewahrung und Schutz gegen widridge äußere Einflüsse in eine als Aufbewahrungstasche, vorzugsweise Plastiktasche; ausgebildete Eingabe-/Ausgabe-Einrichtung 2 gesteckt ist. Die gezeigte Eingabe-/Ausgabe-Einrichtung 2 enthält ein Sendeorgan und ein Empfangsorgan sowie zumindest ein Bedienungselement. Die als ortsfestes Terminal dienende drahtlose Sende-/Empfangs-Einrichtung 3 enthält ebenfalls ein Sendeorgan und ein Empfangsorgan und ist zur Kommunikation mit einer ortsfesten Einrichtung verbindbar. Die drahtlose Datenübertragung in Richtung von der Sende-/Empfangs-Einrichtung 3 zu der Eingabe-/Ausgabe-Einrichtung 2 und umgekehrt kann vorzugsweise mittels Infrarotwellen durchgeführt werden. In diesem Fall sind die Sende- und Empfangsorgane jeweils Infrarotsende- bzw.

Empfangsdioden. Die Eingabe-/Ausgabe-Einrichtung 2 enthält außerdem eine für ihre eigene Stromversorgung und die notwendige Stromversorgung für die in sie eingesteckte Chipkarte 1 erforderliche Stromquelle (nicht gezeigt). Der Chip in der Chipkarte 1 weist für die unterschiedlichen Anwendungsfälle unterschiedliche Bereiche eines in dem Chip integrierten Speichers $1_1$, $1_2 \ldots 1_n$, eine für die Auswahl der unterschiedlichen Bereiche notwendige Auswahlschaltung 121 sowie für spezielle Anwendungsfälle als Funktionseinheit einen Prozessor 12 auf (vgl. Fig. 2). Das ortsfeste Terminal in Form der drahtlosen Sende-/Empfangs-Einrichtung 3 enthält bei Vorhandensein mehrerer mobiler Einrichtungen in dem betreffenden Ortsbereich eine Einrichtung, die in an sich bekannter Weise und ggf. nach einer Prioritätsliste einen Mehrfachzugriff steuern kann.

Das Bedienungselement in der Eingabe-/Ausgabe-Einrichtung 2 kann gemäß einer vorteilhaften Weiterbildung der Erfindung ein Kombinationsbedienungselement sein, mittels dessen das Aktivieren der eingesteckten Chipkarte vorzunehmen ist und das außerdem einen Fingerabdrucksensor darstellt. Für spezielle Anwendungsfälle bleibt die Eingabe-/Ausgabe-Einrichtung 2 in ihrem empfangsbereiten Zustand und sendet auf den Empfang eines Signals von dem ortsfesten Terminal hin, mit dem dieses eine Anwendungsinformation überträgt, automatisch die benötigte Nachricht.

Der in der Chipkarte 1 enthaltene Speicher ist vorzugsweise als Halbleiterspeicher ausgebildet, der nichtflüchtig speichert und elektrisch programmierbar ist. Vorzugsweise wird für den Chip innerhalb der Chipkarte die E²PROM-Technologie verwendet.

Die mit dem erfindungsgemäßen Chipkartensystem durchzuführenden Prozesse betreffen folgende Funktionen:

—Verschlüsselung bzw. Entschlüsselung der zu sendenden bzw. zu empfangenden Daten

—Authentizitätsprüfung

—Datensicherung gegen Übertragungsfehler und

—Verarbeitung einer Fingerabdruckinformation.

Zum Auswählen bestimmter Funktionsbereiche in dem Chip wird ein sog. Dialogverfahren durchgeführt. Zum Auswählen und Einschalten aller relevanten und nur dieser Bereiche innerhalb des Chips, die für einen bestimmten Anwendungsfall erforderlich sind, wird ein spezielles Verfahren durchgeführt, das innerhalb der Chipkarte durch den dafür vorgesehenen Prozessor 12 gesteuert wird. Im Zustand des Eingestecktseins der Chipkarte 1 in die Plastikstecktasche wird erfindungsgemäß eine spezielle Prozedur zum Aktivieren, nämlich zum Einschalten der Stromquelle für die Chipkarte 1 und die Sende-/Empfangs-Einrichtung 2 durchgeführt.

Die Datenübertragung kann gemäß einer andern Weiterbildung der Erfindung auch über Mikrowellen abgewickelt werden.

Zusammenfassend ist festzustellen, daß durch das neuartige Chipkartensystem folgende Vorteile gegeben sind:

—Ein Datenaustausch ist wegen des verwendeten breitbandigen Kanals schnell abzuwickeln,

—das Einstecken der Karte in ein Terminal, wie es herkömmlicherweise zu erfolgen hat, entfällt,

—die Personenidentifizierungsnummer PIN kann an einem geeigneten Ort eingegeben werden, an dem eine Beobachtung durch Unbefugte nicht möglich ist.

Zum Schutz der zu übertragenden Daten gegen ein "Abhören" während einer Infrarot- oder Mikrowellenübertragung können die an sich bekannten Verfahren der Nachrichtenverschlüsselung verwendet werden. Soll außerdem auch vermieden werden, daß das System von Unbefugten benutzt wird, kann außerdem eine Authentizitätsprüfung vorgenommen werden.

## Patentansprüche

1. Chipkartensystem mit Chipkarten zur Verwendung als Geldersatz, als Ausweis bzw. als Speichermedium, bei dem eine einzige Chipkarte (1) nacheinander für unterschiedliche Anwendungsfälle benutzbar ist, bei dem für die unterschiedlichen Anwendungsfälle unterschiedliche Bereiche eines in den Chip integrierten Speichers ($1_1, 1_2 \ldots 1_n$) oder einer Funktionseinheit vorgesehen sind, wobei für die Auswahl der unterschiedlichen Bereiche im Chip eine Auswahlschaltung (121) in dem Chip vorgesehen ist, für die eine bestimmte Auswahlprozedur festgelegt ist, durch welche sichergestellt werden kann, daß die für den betreffenden Anwendungsfall relevanten Bereiche und nur diese zugeordnet werden, daß für spezielle Anwendungsfälle als Funktionseinheit ein Prozessor (12) vorgesehen ist, durch den die in den unterschiedlichen speziellen Anwendungsfällen erforderlichen Prozesse abgewickelt werden, wobei diese multifunktionale Chipkarte (1) dazu geeignet ist, zusammen mit einer Eingabe-/Ausgabe-Einrichtung (2) zu wirken, in der ein das Aktivieren ermöglichendes Kombinationsbedienungselement vorgesehen ist und in die die Chipkarte (1) einsteckbar ist und die für einen mobilen Einsatz zusätzlich eine Stromquelle enthält, und wobei die Eingabe-/Ausgabe-Einrichtung (2) mit einer drahtlosen Sende-/Empfangs-Einrichtung (3) zur Kommunikation mit einer ortsfesten Einrichtung verbindbar ist, dadurch gekennzeichnet, daß der Prozessor (12) in an sich bekannter Weise in den Chip eingebaut ist, daß diese ortsfeste Einrichtung ihrerseits eine Einrichtung enthält, die bei Vorhandensein mehrerer mobiler Einrichtungen in dem betreffenden Ortsbereich in an sich bekannter Weise und ggf. nach einer Prioritätsliste einen Mehrfachzugriff steuert, und daß für spezielle Anwendungen die Eingabe-/Ausgabe-Einrichtung (2) im empfangsbereiten Zustand bleibt und auf den Empfang eines Signals von der ortsfesten Station hin, mit der diese eine Anwendungsinformation überträgt, automatisch die benötigte Nachricht sendet.

2. Chipkartensystem nach Anspruch 1, dadurch gekennzeichnet, daß die Eingabe-/Ausgabe-Einrichtung (2) als Plastiktasche ausgebildet ist, in der die Chipkarte (1) ständig getragen wird, wodurch eine Verschmutzung der empfindlichen äußeren Kontaktstellen der Chipkarte (1) vermeidbar ist, und daß das Kombinationsbedienungselement in der Eingabe-/Ausgabe-Einrichtung (2) vorgesehen ist, mittels dessen das Aktivieren vorzunehmen ist und das außerdem einen Fingerabdrucksensor darstellt.

3. Sende-/ und Empfangseinrichtung für das Chipkartensystem nach Anspruch 1, dadurch gekennzeichnet, daß die Kommunikation über Infrarotwellen abgewickelt wird.

4. Sende-/Empfangseinrichtung für das Chipkartensystem nach Anspruch 1, dadurch gekennzeichnet, daß die Kommunikation über Mikrowellen abgewickelt wird.

5. Chipkartensystem nach Anspruch 1, dadurch gekennzeichnet, daß der Speicher ein Halbleiterspeicher ist.

6. Chipkartensystem nach Anspruch 5, dadurch gekennzeichnet, daß der Halbleiterspeicher nichtflüchtig speichert und elektrisch programmierbar ist.

7. Chipkartensystem nach Anspruch 1 und 6, dadurch gekennzeichnet, daß für den Chip die $E^2PROM$-Technik vorgesehen ist.

8. Chipkartensysteme nach einem der vorhergehenden Ansprüche, dadurch gekennzeichnet, daß die Prozesse folgende Funktionen betreffen:

—Verschlüsselung bzw. Entschlüsselung der zu sendenden bzw. zu empfangenden Daten

—Authentizitätsprüfung

—Datensicherung gegen Übertragungsfehler

—Verarbeitung der Fingerabdruckinformation.

## Revendications

1. Système à cartes à puces, comportant des cartes à puces destinées à être utilisées à la place d'argent, en tant que cartes d'identité ou en tant que support de mémoire, et dans lequel une seule carte à puce (1) peut être utilisée successivement pour différents cas d'utilisation, et dans lequel, pour les cas d'utilisation différents, il est prévu des zones différentes d'une mémoire ($1_1$, $1_2 \ldots 1_n$), intégrée dans une puce, ou une unité fonctionnelle, et dans lequel pour la sélection des différentes zones de la puce, il est prévu, dans cette dernière, un circuit d'évaluation (121), pour lequel est fixée une procédure déterminée de sélection, grâce à laquelle on puet être certain que les zones afférentes au cas d'utilisation considéré et seulement ces zones sont associées, et dans lequel, pour des cas d'application particuliers, il est prévu, en tant qu'unité fonctionnelle, un processeur (12), au moyen duquel les processus nécessaires pour les différents cas d'utilisation particuliers sont exécutés, et dans lequel cette carte à puce multifonctionnelle (1) est appropriée pour coopérer avec un dispositif d'entrée/sortie (2), dans lequel un élément de commande de combinaison permettant l'activation est prévu et dans lequel la carte à puce (1) peut être enfichée et qui contient en outre une source de courant, pour une utilisation mobile, et dans lequel le dispositif d'entrée/sortie (2) peut être relié à un dispositif d'émission/réception (3) sans fil pour communiquer avec un dispositif fixe, caractérisé par le fait que le processeur (12) est monté de façon connue en soi dans la puce, que ce dispositif fixe contient pour sa part un dispositif qui, lors de la présence de plusieurs dispositifs mobiles dans l'environnement considéré, commande d'une manière connue en soi et éventuellement selon une liste de priorités, un accès multiple et que pour des applications particulières, le dispositif d'entrée/sortie (2) reste pour l'état à la réception et émet automatiquement l'information nécessaire, lors de la réception, à partir du poste fixe, d'un signal, avec lequel l'information d'utilisation est transmise.

2. Système à cartes à puces suivant la revendication 1, caractérisé par le fait que le dispositif d'entrée/sortie (2) est réalisé sous la forme d'une poche plastique, dans laquelle la carte à puce (1) est disposée à demeure, ce qui permet d'éviter un salissement des plaques extérieures sensibles de contact de la carte à puce (1), et que dans le dispositif d'entrée/sortie (2) est disposé l'élément de commande de combinaison, à l'aide duquel l'activation doit être réalisée et qui représente en outre un capteur d'empreintes digitales.

3. Dispositif d'émission/réception pour le système à cartes à puces suivant la revendication 1, caractérisé par le fait que la communication est exécutée au moyen d'ondes de rayonnement infrarouge.

4. Dispositif d'émission/réception pour le système à cartes à puces suivant la revendication 1, caractérisé par le fait que la communication est réalisée à l'aide de microondes.

5. Système à cartes à puces suivant la revendication 1, caractérisé par le fait que la mémoire est une mémoire à semiconducteurs.

6. Système à cartes à puces selon la revendication 5, caractérisé par le fait que la mémoire à semiconducteurs utilise une mémorisation non volatile et est programmable électriquement.

7. Système à cartes à puces suivant les revendications 1 et 6, caractérisé par le fait que pour la puce, on utilise la technique E²PROM.

8. Système à cartes à puces suivant les revendications précédentes, caractérisés par le fait que les processus concernent les fonctions suivantes:

—codage er décodage des données devant être émises ou recues,

—contrôle d'authenticité,

—sécurité des données vis-à-vis de défauts de transmission,

—traitement de l'information d'empreintes digitales.

**Claims**

1. Chip card system with chip cards for use as a money substitute, as an identity card or as a storage medium, with which a single chip card (1) can be used successfully for different application cases, with which different areas of money ($1_1$, $1_2 \ldots 1_n$), integrated into the chip, or of a function unit are provided for the different application cases, a selection circuit (121) being provided in the chip for the selection of the different areas in the chip, for which circuit a certain selection procedure is fixed, by which it can be ensured that the areas relevant for the application case concerned and only these are assigned, that a processor (12), by which the processes necessary for the different specific application cases are executed, is provided for specific application cases as a function unit, this multifunctional chip card (1) being suitable to act together with an input/output device (2), in which a combination control element permitting activation is provided and into which the chip card (1) can be inserted and which additionally contains a power source for mobile use, and the input/output device (2) being connectable to a wireless transmitting/receiving device (3) for communication with a stationary device, characterized in that the processor (2) is fitted in the chip in a way known per se, in that this stationary device for its part contains a device which, if a plurality of mobile devices are present in the local area concerned, controls a multiple access in a way known per se and, if appropriate, according to a priority list, and in that the input/output device (2) remains in the ready-to-receive state for specific applications and, in response to the reception of a signal from the stationary station, with which the latter transmits an item of application information, automatically sends the required message.

2. Chip card system according to Claim 1, characterized in that the input/output device (2) is designed as a plastic wallet in which the chip card (1) is permanently carried, whereby the soiling of the sensitive outer contact points of the chip card (1) can be avoided, and in that the combination control element, by means of which activation is to be performed and which, in addition, represents a fingerprint sensor, is provided in the input/output device (2).

3. Transmitting/receiving device for the chip card system according to Claim 1, characterized in that communication is performed via infrared waves.

4. Transmitting/receiving device for the chip card system according to Claim 1, characterized in that communication is performed via microwaves.

5. Chip card system according to Claim 1, characterized in that the memory is a semiconductor memory.

6. Chip card system according to Claim 5, characterized in that the semiconductor memory stores in a non-volatile manner and is electrically programmable.

7. Chip card system according to Claims 1 and 6, characterized in that the E²PROM technique is provided for the chip.

8. Chip card system according to one of the preceding claims, characterized in that the processes concern the following functions:

—encoding or decoding of the data to be transmitted or to be received
—authenticity checking

—data security against transmission errors
—processing of fingerprint information.

## FIG 1

BEDIENUNGSELEMENTE SENDE-/EMPFANGS=DIODEN

SENDEDIODE

EMPFANGSDIODE

## FIG 2

| $1_1$ | $1_2$ | $1_3$ | | | $1_n$ |
|---|---|---|---|---|---|

121
VER- UND ENTSCHLÜSSELUNG
AUTHENTIZITÄTSPRÜFUNG
DATENSICHERUNG
EINGABE/AUSGABE-LOGIK

FIG 4